# EUROPEAN PATENT APPLICATION

(11) **EP 4 749 602 A1**
(43) Date of publication of application: **27.05.2026**
(21) Application number: 25185913.8
(22) Date of filing: 27.06.2025
(51) Int. Cl.: G08G 5/21, G08G 5/23, G08G 5/38, G08G 5/54, G08G 5/55, G08G 5/74

(54) **MOBILITY CONTROL APPARATUS AND METHOD THEREOF**

(30) Priority: 21.11.2024 KR 20240167681
(71) Applicant: Hyundai Motor Company, Seoul 06797 (KR); Kia Corporation, Seoul 06797 (KR)
(72) Inventor: MOON, Gun Hee, 18280 Hwaseong-si, Gyeonggi-do (KR); HAN, Su Young, 18280 Hwaseong-si, Gyeonggi-do (KR); RYU, Hyun Jee, 18280 Hwaseong-si, Gyeonggi-do (KR); LIM, Jun Young, 18280 Hwaseong-si, Gyeonggi-do (KR); KIM, Hyun Jin, 18280 Hwaseong-si, Gyeonggi-do (KR)
(74) Representative: Isarpatent

(57) **Abstract**

A system for operating a mobility apparatus includes a sensor, an output device, a memory storing at least one instruction, and a processor operatively connected with the sensor, the output device, and the memory. The system is configured to identify an estimated landing point of the mobility apparatus based on sensing information obtained using the sensor, and to provide a user with at least one image including marking information corresponding to the estimated landing point using the output device.

## Description

### TECHNICAL FIELD

The present disclosure relates to a mobility control apparatus and a method thereof, and more particularly, relates to technologies for providing information about a landing site for convenience of a user in a mobility landing process.

### BACKGROUND

Various technologies may be used for controlling a moving means, such as a mobility apparatus. For example, for the mobility apparatus, various devices may assist with landing for convenience of a user (e.g., a pilot) in the process in which the mobility apparatus lands on a landing site (e.g., a helipad or a vertiport).

In some cases, various types of display devices may be provided in the mobility apparatus. For instance, a mobility control apparatus may display information about the landing site on the display device, such that the user checks the landing site using an image and conveniently perform control for landing.

In some cases, where the mobility control apparatus simply provides an image according to a real-time position of the mobility apparatus, it may fail to recognize information about an estimated landing point in advance. In some cases, where it may be unable to use information according to the real-time position or the flight state of the mobility, the user may further collect other pieces of information for landing control.

### SUMMARY

The present disclosure describes an apparatus or system for assisting with landing control by additionally using a real-time relationship between a mobility apparatus and a landing point (or a landing site), flight information, and the like, other than visual flight rules (VFR) in the process in which the mobility apparatus lands to overcome a view problem caused by the wings and fuselage of the mobility apparatus and safely and conveniently perform landing control.

The present disclosure further describes an apparatus or system for displaying various types of real-time flight images (e.g., a top-view image and/or a third-person image) using a display device to conveniently perform landing control.

According to one aspect of the subject matter described in this application, a system for operating a mobility apparatus includes a sensor, an output device, a memory that stores at least one instruction; and a processor operatively connected with the sensor, the output device, and the memory. The at least one instruction is configured to, when executed by the processor, cause performance of operations including identifying an estimated landing point of the mobility apparatus based on sensing information obtained using the sensor, and providing, via the output device, a user with at least one image including marking information corresponding to the estimated landing point.

Implementations according to this aspect can include one or more of the following features. For example, the operations can further include obtaining the sensing information about the mobility apparatus and a landing site using the sensor while the mobility apparatus performs a hovering operation above an area adjacent to the landing site.

In some implementations, the sensing information can include at least one of posture information of the mobility apparatus, a speed of the mobility apparatus, a flight direction of the mobility apparatus, a real-time position of the mobility apparatus, or a relative distance between the mobility apparatus and a landing site, or any combination thereof.

In some implementations, the system can include a marking device configured to operate a light source, where identifying the estimated landing point includes estimating a landing point based on the mobility apparatus maintaining a current flight state using the sensing information. The operations can further include operating the marking device to irradiate light from the light source to the estimated landing point, where the marking information includes a specified marker corresponding to the light source. In some examples, the operations can further include identifying an altitude of the mobility apparatus using the sensor, and adjusting a size of the light irradiated from the light source based on a variation of the altitude while maintaining a size of the specified marker.

In some implementations, the operations can further include identifying a flight posture and a flight direction of the mobility apparatus using the sensor, and determining an irradiation direction of the light source toward the estimated landing point relative to the flight posture and the flight direction.

In some implementations, the sensor can include at least one external camera configured to obtain information about the estimated landing point, where the operations can further include providing, via the output device, the sensing information obtained using the at least one external camera. In some examples, the sensor further includes at least one internal camera, where the operations can further include identifying, using the at least one internal camera, a user direction that the user faces or in which the user adjusts the mobility apparatus, and adjusting a sensing direction of the at least one external camera to thereby orient the at least one external camera to the user direction.

In some implementations, the operations can further include identifying a real-time flight image from a third-person point of view based on (i) the at least one image about the estimated landing point and (ii) flight information of the mobility apparatus, where the at least one image and the flight information are obtained using the sensor, and providing the user with the real-time flight image via the output device.

In some examples, the operations can further include identifying a real-time flight image from a top-view point of view based on (i) the at least one image about the estimated landing point and (ii) flight information of the mobility apparatus, where the at least one image and the flight information are obtained using the sensor, and providing the user with the real-time flight image via the output device.

According to another aspect, a method for operating a mobility apparatus includes identifying, by a processor, an estimated landing point of the mobility apparatus based on sensing information obtained using a sensor, and providing, through an output device, a user with at least one image including marking information corresponding to the estimated landing point.

Implementations according to this aspect can include one or more of the following features. For example, the method can further include obtaining, by the processor, the sensing information about the mobility apparatus and a landing site using the sensor while the mobility apparatus performs a hovering operation above an area adjacent to the landing site. In some examples, the sensing information can include at least one of posture information of the mobility apparatus, a speed of the mobility apparatus, a flight direction of the mobility apparatus, a real-time position of the mobility apparatus, or a relative distance between the mobility apparatus and a landing site, or any combination thereof.

In some implementations, identifying the estimated landing point can include estimating, by the processor, a landing point based on the mobility apparatus maintaining a current flight state using the sensing information, where the method can further include irradiating light from a light source to the estimated landing point using a marking device, and providing, via the output device, the user with the marking information including a specified marker corresponding to the light source.

In some implementations, the method can further include identifying, by the processor, an altitude of the mobility apparatus using the sensor, and adjusting, by the processor, a size of the light irradiated from the light source based on a variation of the altitude while maintaining a size of the specified marker.

In some examples, the method can further include identifying, by the processor, a flight posture and a flight direction of the mobility apparatus using the sensor, and determining, by the processor, an irradiation direction of the light source toward the estimated landing point relative to the flight posture and the flight direction.

In some implementations, the method can further include providing, via the output device, the sensing information obtained using at least one external camera that is included in the sensor, where the at least one external camera is configured to obtain information about the estimated landing point. In some examples, the method can further include identifying, using at least one internal camera included in the sensor, a user direction that the user faces or in which the user adjusts the mobility apparatus, and adjusting, by the processor, a sensing direction of the at least one external camera to thereby orient the at least one external camera to the user direction.

In some implementations, the method can further include identifying, by the processor, a real-time flight image from a third-person point of view based on (i) the at least one image about the estimated landing point and (ii) flight information of the mobility apparatus, where the at least one image and the flight information are obtained using the sensor, and providing, via the output device, the user with the real-time flight image.

In some implementations, the method can further include identifying, by the processor, a real-time flight image from a top-view point of view based on (i) the at least one image about the estimated landing point and flight information of the mobility apparatus, where the at least one image and the flight information are obtained using the sensor, and providing, via the output device, the user with the real-time flight image.

### BRIEF DESCRIPTION OF THE DRAWINGS

The above and other objects, features and advantages of the present disclosure will be more apparent from the following detailed description taken in conjunction with the accompanying drawings.
FIG. 1 is a block diagram illustrating components of an example of a system for operating a mobility apparatus.
FIG. 2 is a conceptual diagram illustrating an example of an operation performed in a landing process by the mobility apparatus.
FIG. 3 is a block diagram illustrating example components and an operation of an example of a system for operating a mobility apparatus.
FIG. 4 is a conceptual diagram illustrating an example operation performed in a landing process by the mobility apparatus.
FIG. 5 is a conceptual diagram illustrating an example operation performed in a landing process by the mobility apparatus.
FIG. 6 is a conceptual diagram illustrating an example of example information output by the system.
FIG. 7 is a flowchart showing an example of a method for operating a mobility apparatus.
FIG. 8 illustrates an example of a computing system configured to perform the method.

With regard to description of drawings, the same or similar components will be marked by the same or similar reference signs.

### DETAILED DESCRIPTION

Hereinafter, one or more implementations of the present disclosure will be described in detail with reference to the example drawings. In adding the reference numerals to the components of each drawing, it should be noted that the identical component is designated by the identical numerals even when they are displayed on other drawings. Further, in describing the implementation of the present disclosure, a detailed description of well-known features or functions will be ruled out in order not to unnecessarily obscure the gist of the present disclosure.

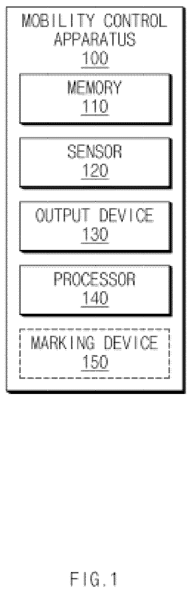

Hereinafter, implementations of the present disclosure will be described in detail with reference to FIGS. 1 to 8.

FIG. 1 is a block diagram illustrating components of a mobility control apparatus.

In some implementations, a mobility control apparatus 100 can include at least one of a memory 110, a sensor 120, an output device 130, a processor 140, or a marking device 150, or any combination thereof. The configuration of the mobility control apparatus 100 illustrated in FIG. 1 is illustrative, and implementations of the present disclosure are not limited thereto. For example, the mobility control apparatus 100 can further include components (e.g., an interface, a communication device, or a display, or any combination thereof) which are not illustrated in FIG. 1.

In some implementations, the memory 110 can store a command or data. For example, the memory 110 can store at least one instruction, when executed by the processor 140, causing the mobility control apparatus 100 to perform various operations. For example, the memory 110 can include a non-transitory memory.

In some examples, the memory 110 and the processor 140 can be implemented as one chipset. The processor 140 can include at least one of a communication processor or a modem. In some examples, the processor 140 can include a computer, a microprocessor, an electric circuit, etc.

For example, the memory 110 can store an operation history of the mobility control apparatus 100.

In some implementations, the sensor 120 can obtain various pieces of information about flight of a mobility apparatus.

For example, the mobility apparatus can include an air mobility apparatus. As a detailed example, the mobility apparatus can include a flight vehicle.

For example, the sensor 120 can include at least one camera (e.g., an internal camera and/or an external camera).

As an example, the internal camera can be configured to obtain information about the inside of the mobility apparatus (e.g., a position of a user, a line of sight of the user, a posture of the user, or the like).

As an example, the external camera can be configured to obtain information about the outside (e.g., a landing pad, a landing site, a helipad, or a vertiport) of the mobility apparatus.

For example, the sensor 120 can include at least one of a posture measurement sensor (e.g., an acceleration sensor or a gyro sensor), a distance sensor, or a speed sensor, or any combination thereof.

As an example, the posture measurement sensor can be configured to obtain information about a flight posture of the mobility apparatus. The flight posture can include, for example, information about at least one of a flight direction of the mobility apparatus, a direction the mobility apparatus faces, an angle between the mobility apparatus and the ground, a relative position between a fuselage of the mobility apparatus and the ground, or an angle between the fuselage of the mobility apparatus and the ground, or the like.

As an example, the distance sensor can be configured to obtain a distance between the mobility apparatus and an external object. The external object can include, for example, another mobility apparatus, a person, a moving device, the ground, a landing site (or a landing point).

As an example, the speed sensor can be configured to obtain a flight speed of the mobility apparatus. The speed sensor can be configured to obtain, for example, information about a real-time flight speed of the mobility apparatus, flight acceleration of the mobility apparatus, and a ground speed (GS) of the mobility apparatus.

In some implementations, the output device 130 can visually and/or audibly output various pieces of information about flight of the mobility apparatus.

For example, the output device 130 can be provided in at least one area in the mobility apparatus and can be implemented with at least one display.

In some implementations, the output device 130 may include, but is not limited to, a display panel (e.g., an LCD, OLED, or E-ink display), a projection module, or an augmented reality (AR) device capable of rendering visual content. The output device 130 may be configured to visually present the marking information by overlaying a graphical marker or symbol at the estimated landing point on an image or map displayed on the screen.

For example, the output device 130 can provide the user with an image about flight of the mobility apparatus. As an example, the output device 130 can display an image (e.g., a top-view image and/or a third-person image) including the mobility apparatus and the landing point, in the process in which the mobility apparatus makes a landing on the landing point.

In some implementations, the processor 140 can be operatively connected with at least one of the memory 110, the sensor 120, the output device 130, or the marking device 150, or any combination thereof. In some implementations, the processor 140 can control an operation of the at least one of the memory 110, the sensor 120, the output device 130, or the marking device 150, or the any combination thereof.

For example, the processor 140 can identify an estimated landing point of the mobility apparatus, based on sensing information obtained using the sensor 120.

As an example, while the mobility apparatus performs hovering (or stop flight) on an area adjacent to the landing site, the processor 140 can obtain sensing information about the mobility apparatus and the landing site using the sensor 120.

As an example, the sensing information can include at least one of posture information of the mobility apparatus, a speed of the mobility apparatus, a flight direction of the mobility apparatus, a real-time position of the mobility apparatus, or a relative distance between the mobility apparatus and the landing site, or any combination thereof.

As an example, the sensing information can include images of the landing site and/or the estimated landing point, which are obtained using at least one external camera.

As an example, the processor 140 can identify the estimated landing point estimated when the mobility apparatus maintains current flight, using the sensing information. The estimated landing point can be, for example, one area of the landing site.

For example, the processor 140 can display a specified marker on the estimated landing point using the marking device 150. For example, the processor 140 can irradiate a light source (e.g., a laser) to the estimated landing point using the marking device 150, such that the specified marker corresponding to the light source is displayed on the estimated landing point. For example, the processor 140 can provide the user with marking information including the specified marker via the output device 130. In other words, the processor 140 can provide the user with an image of the estimated landing point on which the specified marker is displayed, via the output device 130.

For example, the processor 140 can control a light source irradiation operation of the marking device 150 depending on the flight state of the mobility apparatus.

As an example, the processor 140 can identify an altitude of the mobility apparatus using the sensor 120 and can adjust a size of the irradiated light source (or an irradiation size) depending on a change in altitude. As a result, the processor 140 can irradiate a light source, such that the size of the specified marker displayed on the estimated landing point is kept constant although the altitude of the mobility apparatus varies.

As an example, the processor 140 can identify a flight posture and a flight direction of the mobility apparatus using the sensor 120 and can determine an irradiation direction of the light source in consideration of changes in the identified flight posture and the identified flight direction. As a result, the processor 140 can prevent a problem in which the specified marker is not displayed on the estimated landing point as the irradiation direction of the light source is wrong due to a change in the direction the mobility apparatus faces, the flight posture, or the like. In other words, the processor 140 can irradiate a light source in consideration of a change in flight posture or flight direction, such the specified marker is displayed on the estimated landing point.

As an example, the processor 140 can adjust a sensing direction (or an image capture direction) of the at least one external camera included in the sensor 120 based on the state of the user. For example, the processor 140 can identify a direction (or a line of sight) the user faces or a direction in which the user adjusts the mobility control apparatus 100 using the internal camera included in the sensor 120 and provided in the mobility apparatus and can adjust a sensing direction of the at least one external camera, such that the at least one external camera orients the identified direction.

For example, the direction (or the line of sight) the user faces can be identified using a head-mounted display (HMD). The HMD can include a display in the form of being worn on the head of the user.

For example, the processor 140 can irradiate a light source such that the specified marker is displayed on the estimated landing point of the mobility apparatus, using the marking device 150, based on sensing data obtained using a plurality of sensors included in the sensor 120. For example, the processor 140 can identify the estimated landing point to display the specified marker, using at least one of an image sensor input (e.g., a camera input), a posture measurement sensor input, a distance sensor input, or a speed sensor input, or any combination thereof.

As an example, the processor 140 can obtain the image sensor input including an RGB array of a frame image and/or position information (e.g., a sensing direction) of an image sensor (e.g., an external camera), using the image sensor.

As an example, the processor 140 can obtain the posture measurement sensor input including flight information (e.g., roll, pitch, yaw, an angular velocity, or the like) using the posture measurement sensor.

As an example, the processor 140 can obtain the distance sensor input including a distance between the mobility apparatus and the estimated landing point using the distance sensor.

As an example, the processor 140 can obtain the speed sensor input including a speed of the mobility apparatus using the speed sensor. The speed sensor input can include, for example, a flight speed of the mobility apparatus, which is identified on the basis of a North East down (NED) coordinate system.

As an example, the processor 140 can predict the estimated landing point estimated based on real-time flight information of the mobility apparatus using at least some of the above-mentioned sensor inputs. At this time, assuming that there is no longer another flight control input in the current state of the mobility apparatus, the processor 140 can predict the estimated landing point. For example, while considering the effect of gravity in an environment under the gravity field and ignoring the effect of drag, the processor 140 can predict the estimated landing point.

As an example, the processor 140 can irradiate a light source using the marking device 150, such that the specified marker is displayed on the predicted estimated landing point. The processor 140 can obtain marking information (e.g., at least one image) including the specified marker using the external camera included in the sensor 120.

For example, the processor 140 can provide the user with at least one image including marking information corresponding to the estimated landing point, using the output device 130.

As an example, the at least one image can include at least one of the mobility apparatus, information about the estimated landing point, the specified marker displayed on the estimated landing point, or the image obtained using the at least one external camera, or any combination thereof.

As an example, the marking information can include the specified marker displayed as the processor 140 irradiates the light source to the estimated landing point.

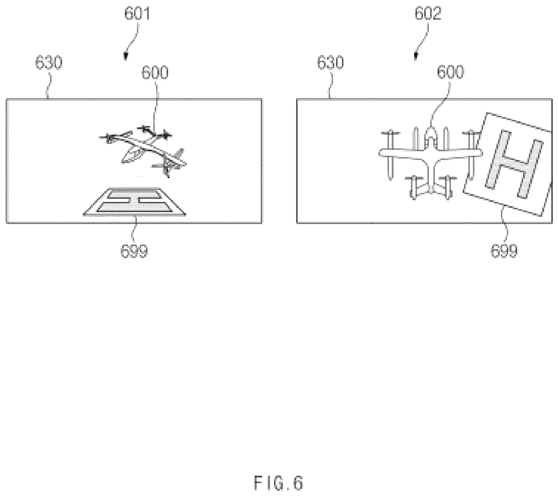

As an example, the processor 140 can identify a real-time flight image from the third-person point of view, based on the image about the estimated landing point and the flight information of the mobility apparatus, which are obtained using the sensor 120, and can provide the user with the identified real-time flight image (e.g., a real-time flight image according to reference numeral 601 of FIG. 6) via the output device 130.

As an example, the processor 140 can identify a real-time flight image from the top-view point of view, based on the image about the estimated landing point and the flight information of the mobility apparatus, which are obtained using the sensor 120, and can provide the user with the identified real-time flight image (e.g., a real-time flight image according to reference numeral 602 of FIG. 6) via the output device 130.

In some implementations, the marking device 150 can be configured to irradiate light from a light source (e.g., laser). The marking device 150 can include the light source, or a projector including the light source.

For example, the marking device 150 can irradiate light from a light source to a specified area, based on control of the processor 140.

For example, while the mobility apparatus performs hovering above the estimated landing point, the marking device 150 can irradiate a light source in the direction of the estimated landing point. The specified marker can be displayed on the estimated landing point of the mobility apparatus, via the irradiation of the marking device 150.

For example, the marking device 150 can adjust an amount of irradiation (or an irradiation size) of the irradiated light source, based on control of the processor 140.

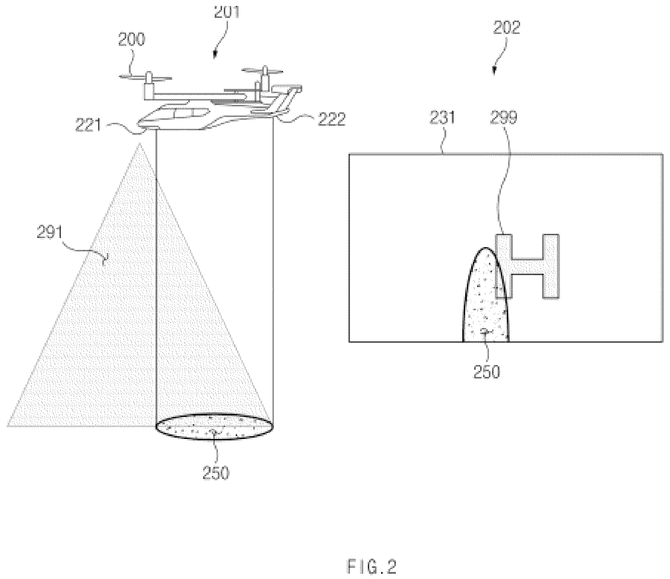

FIG. 2 is a conceptual diagram illustrating an operation performed in a landing process by a mobility apparatus.

Referring to reference numeral 201, in some implementations, a mobility control apparatus (e.g., a mobility control apparatus 100 of FIG. 1) can provide a user with information about an estimated landing point in a landing process of a mobility apparatus 200.

For example, the mobility control apparatus can obtain at least one image including the estimated landing point, using at least one external camera 221 provided in one area of the mobility apparatus 200, and can display the obtained at least one image on an output device (e.g., an output device 130 of FIG. 1). An image capture range of the at least one external camera 221 can be a range according to reference numeral 291.

For example, the mobility control apparatus can irradiate a light source to the estimated landing point using a marking device 222 (e.g., a marking device 150 of FIG. 1) provided in one area of the mobility apparatus 200. A specified marker 250 corresponding to the light source can be displayed on the estimated landing point.

Referring to reference numeral 202, in some implementations, the mobility control apparatus can display the image obtained using the at least one external camera 221, on an output device 231. For example, the specified marker 250 and a structure 299 (e.g., a helipad) corresponding to a landing target point can be included in the image.

For example, the mobility control apparatus can additionally or alternatively output images according to reference numeral 601 and/or reference numeral 602 of FIG. 6, other than the image according to reference numeral 202.

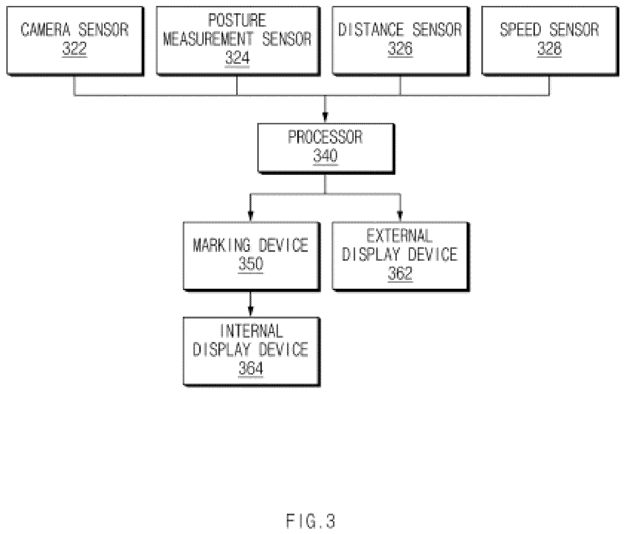

FIG. 3 is a block diagram illustrating components and an operation of a mobility control apparatus.

In some implementations, a mobility control apparatus (e.g., a mobility control apparatus 100 of FIG. 1) can obtain sensing information using at least one sensor included in a sensor (e.g., a sensor 120 of FIG. 1) and can process the sensing information by means of a processor 340 (e.g., a processor 140 of FIG. 1) to deliver the processed result to a marking device 350, an external display device 362, and/or an internal display device 364.

For example, a camera sensor 322 can include an internal camera provided inside a mobility apparatus and an external camera provided outside the mobility apparatus.

As an example, the processor 340 can obtain information (e.g., a line of sight of a user, a position of the user, a posture of the user, or the like) inside the mobility apparatus using the internal camera.

As an example, the processor 340 can obtain information outside the mobility apparatus (e.g., an image about the periphery of the mobility apparatus) using the external camera. If there are a plurality of external cameras, the processor 340 can obtain an image from each of the plurality of external cameras and can synthesize the obtained images into one image to output the one image via the internal display device 364.

For example, a posture measurement sensor 324 can include a gyro sensor and/or an acceleration sensor. The posture measurement sensor 324 can obtain information about a flight posture of the mobility apparatus.

For example, a distance sensor 326 can obtain a relative distance between the mobility apparatus and an external object (e.g., the ground).

For example, a speed sensor 328 can obtain a real-time flight speed of the mobility apparatus.

For example, the camera sensor 322, the posture measurement sensor 324, the distance sensor 326, and the speed sensor 328 can be implemented as one sensor (e.g., a sensor 120 of FIG. 1).

For example, the processor 340 can identify flight information (e.g., a flight posture, a flight direction, a flight speed, or the like) of the mobility apparatus, based on sensing information obtained using at least one of the camera sensor 322, the posture measurement sensor 324, the distance sensor 326, or the speed sensor 328, or any combination thereof.

For example, the processor 340 can identify an estimated landing point based on the sensing information and can irradiate a light source to the estimated landing point using the marking device 350.

For example, the processor 340 can provide the user with an image including a specified marker displayed on a portion of the estimated landing point in response to the irradiated light, using the internal display device 364.

For example, additionally or alternatively, the processor 340 can irradiate light from a light source to the estimated landing point using the external display device 362. The external display device 362 can be a separate irradiation device independent of the marking device 350. For example, the processor 340 can display an area expected to be present if the mobility apparatus lands on one portion of the estimated landing point using the external display device 362 provided outside the fuselage of the mobility apparatus.

For example, the processor 340 can provide the user with at least one image including marking information corresponding to the estimated landing point, using the internal display device 364.

As an example, the processor 340 can identify a real-time flight image from the third-person point of view, based on an image about the estimated landing point and flight information of the mobility apparatus, which are obtained by means of the sensor, and can provide the user with the real-time flight image via the internal display device 364.

As an example, the processor 340 can identify a real-time flight image from the top-view point of view, based on the image about the estimated landing point and the flight information of the mobility apparatus, which are obtained using the sensor, and can provide the user with the real-time flight image via the internal display device 364.

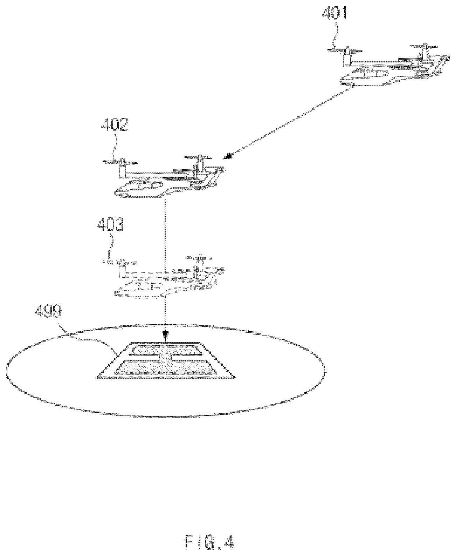

FIG. 4 is a conceptual diagram illustrating an operation performed in a landing process by a mobility apparatus.

In some implementations, while a mobility apparatus arrives above a landing site and then performs hovering corresponding to the landing site, a mobility control apparatus (e.g., a mobility control apparatus 100 of FIG. 1) can perform various operations to assist with landing. The mobility apparatus according to FIG. 4 can fly in an order of reference numerals 401, 402, and 403 depending on an order of times until landing.

For example, according to reference numeral 401, the mobility apparatus can fly to land on a structure 499 (e.g., a helipad) corresponding to the landing site.

For example, according to reference numeral 402, the mobility apparatus can arrive above the structure 499 corresponding to the landing site and can perform hovering. While performing the hovering, the mobility control apparatus can provide the user with various types of images (e.g., real-time flight image(s) from the third-person point of view and/or the top-view point of view) via an output device to assist with landing.

For example, according to reference numeral 403, the mobility apparatus can perform descent flight to land on the estimated landing point adjacent to the structure 499. Even in the descent flight process, the mobility control apparatus can continuously provide the user with a real-time flight image via the output device.

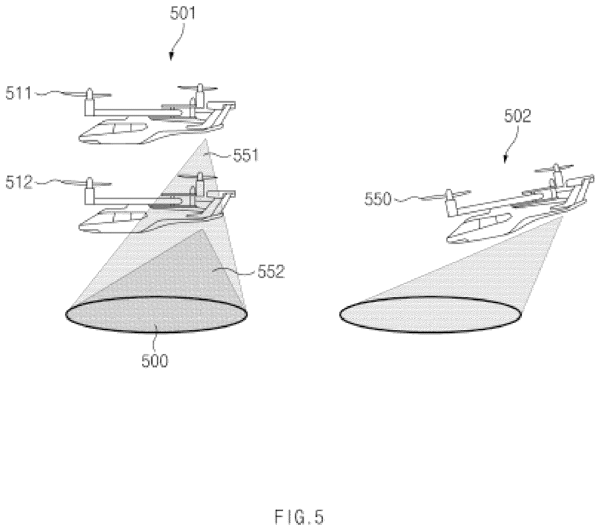

FIG. 5 is a conceptual diagram illustrating an operation performed in a landing process by a mobility apparatus.

In some implementations, a mobility control apparatus (e.g., a mobility control apparatus 100 of FIG. 1) can differently adjust an irradiation size of a light source depending on an altitude of a mobility apparatus.

Referring to reference numeral 511, in some implementations, while the mobility apparatus flies at a first altitude, the mobility control apparatus can irradiate a light source at a first size such that a specified marker 550 is displayed on an estimated landing point.

Referring to reference numeral 512, in some implementations, while the mobility apparatus flies at a second altitude smaller than the first altitude, the mobility control apparatus can irradiate a light source at a second size greater than the first size such that the specified marker 550 is displayed on the estimated landing point. In other words, the mobility control apparatus can irradiate a light source, such that the irradiation size is inversely proportional to a flight altitude.

As a result, the mobility control apparatus can irradiate a light source, such that the specified marker 550 does not change in size and is displayed to be constant depending on the altitude of the mobility apparatus.

Referring to reference numeral 502, in some implementations, the mobility control apparatus can irradiate a light source with regard to a flight direction and a flight posture of a mobility apparatus 500. The mobility apparatus 500 according to reference numeral 502 can be flying such that the front of the fuselage relatively faces the ground. Thus, the mobility control apparatus can identify an irradiation direction of the light source for allowing the specified marker 550 to be accurately displayed on the estimated landing point, with regard to the flight direction and the flight posture, which are shown, and can irradiate the light source.

FIG. 6 is a conceptual diagram illustrating information output by a mobility control apparatus.

In some implementations, a mobility control apparatus (e.g., a mobility control apparatus 100 of FIG. 1) can provide a user with at least one image which assists with landing of a mobility apparatus 600, using an output device 630 (e.g., an output device 130 of FIG. 1) (e.g., a display device) provided in the mobility apparatus 600.

Referring to reference numeral 601, in some implementations, the mobility control apparatus can output a real-time flight image from the third-person point of view on the output device 630.

For example, the mobility control apparatus can output a real-time flight image from the third-person point of view, which includes the mobility apparatus 600 and a structure 699 adjacent to an estimated landing point. The mobility control apparatus can obtain flight information of the mobility apparatus 600 and external information using a sensor (e.g., a sensor 120 of FIG. 1) and can collect the obtained pieces of information to identify the real-time flight image from the third-person point of view and can display the identified real-time flight image on the output device 630. As an example, the real-time flight image from the third-person point of view can be an image from the point of view looking at the mobility apparatus 600 from the side.

Referring to reference numeral 602, in some implementations, the mobility control apparatus can output a real-time flight image from the top-view point of view on the output device 630.

For example, the mobility control apparatus can output a real-time flight image from the top-view point of view, which includes the mobility apparatus 600 and the structure 699 adjacent to the estimated landing point. The mobility control apparatus can obtain the flight information of the mobility apparatus and the external information using the sensor and can collect the obtained pieces of information to identify the real-time flight image from the top-view point of view, and can display the identified real-time flight image on the output device 630. The real-time flight image from the top-view point of view can be an image from the point of view looking at the mobility apparatus 600 from the top to the bottom.

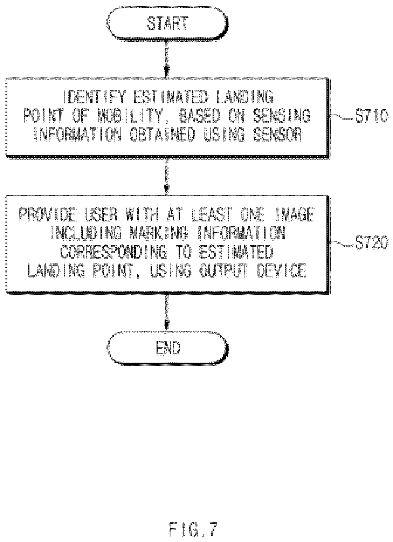

FIG. 7 is a flowchart of a mobility apparatus control method.

In some implementations, a mobility control apparatus (e.g., a mobility control apparatus 100 of FIG. 1) can perform operations disclosed in FIG. 7. For example, at least some of components (e.g., a memory 110, a sensor 120, an output device 130, a processor 140, and a marking device 150 of FIG. 1) included in the mobility control apparatus can be configured to perform the operations of FIG. 7.

In some implementations, operations in S710 and S720 can be sequentially performed, but they are not necessarily sequentially performed. For example, in some examples, an order of the respective operations can be changed, and at least two operations can be performed in parallel. Furthermore, contents, which correspond to or are duplicated with the contents described above in conjunction with FIG. 7, can be briefly described or omitted.

In some implementations, in S710, the mobility control apparatus can identify an estimated landing point of a mobility apparatus, based on sensing information obtained using a sensor.

As an example, the mobility control apparatus can obtain the sensing information including at least one of posture information of the mobility apparatus, a speed of the mobility apparatus, a flight direction of the mobility apparatus, a real-time position of the mobility apparatus, or a relative distance between the mobility apparatus and a landing site, or any combination thereof, using the sensor.

For example, the mobility control apparatus can obtain sensing information about an image of a landing site including an estimated landing point, using the sensor (e.g., at least one external camera).

In some implementations, in S720, the mobility control apparatus can provide a user with at least one image including marking information corresponding to the estimated landing point, using an output device.

For example, the at least one image can include the estimated landing point and a specified marker corresponding to a light source irradiated using a marking device.

For example, the at least one image can include an image from the third-person point of view or the top-view point of view.

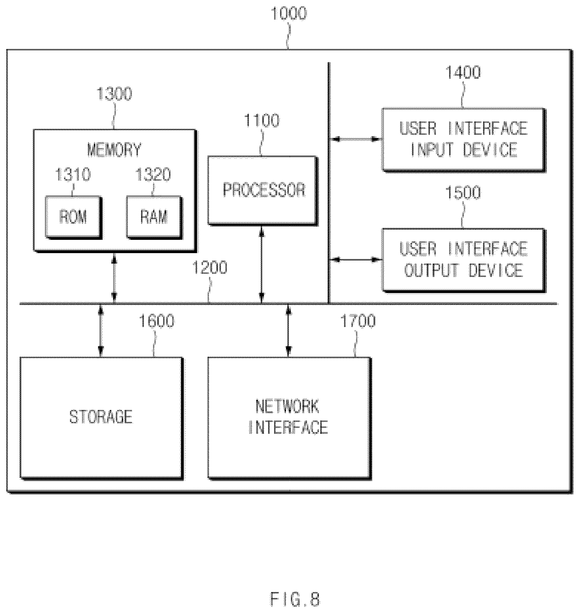

FIG. 8 illustrates a computing system about a mobility apparatus control method.

Referring to FIG. 8, a computing system 1000 about the mobility apparatus control method can include at least one processor 1100, a memory 1300, a user interface input device 1400, a user interface output device 1500, storage 1600, and a network interface 1700, which are connected with each other via a bus 1200.

The processor 1100 can be a central processing unit (CPU) or a semiconductor device that processes instructions stored in the memory 1300 and/or the storage 1600. The memory 1300 and the storage 1600 can include various types of volatile or non-volatile storage media. For example, the memory 1300 can include a ROM (Read Only Memory) 1310 and a RAM (Random Access Memory) 1320.

Accordingly, the operations of the method or algorithm described in connection with the implementations disclosed in the specification can be directly implemented with a hardware module, a software module, or a combination of the hardware module and the software module, which is executed by the processor 1100. The software module can reside on a storage medium (that is, the memory 1300 and/or the storage 1600) such as a RAM, a flash memory, a ROM, an EPROM, an EEPROM, a register, a hard disc, a removable disk, and a CD-ROM.

The example storage medium can be coupled to the processor 1100. The processor 1100 can read out information from the storage medium and can write information in the storage medium. Alternatively, the storage medium can be integrated with the processor 1100. The processor and the storage medium can reside in an application specific integrated circuit (ASIC). The ASIC can reside within a user terminal. In another case, the processor and the storage medium can reside in the user terminal as separate components.

A description will be given below of the effects of the mobility control apparatus and the method thereof.

An implementation of the present disclosure can provide the mobility control apparatus for assisting with landing control by additionally using a real-time relationship between a mobility apparatus and a landing point (or a landing site), flight information, and the like, other than visual flight rules (VFR) in the process in which the mobility apparatus lands to overcome a view problem caused by the wings and fuselage of the mobility apparatus and safely and conveniently perform landing control.

An implementation of the present disclosure can provide the mobility control apparatus for displaying various types of real-time flight images (e.g., a top-view image and/or a third-person image) using a display device to more conveniently perform landing control.

In addition, various effects ascertained directly or indirectly through the present disclosure can be provided.

Hereinabove, although the present disclosure has been described with reference to example implementations and the accompanying drawings, the present disclosure is not limited thereto, but can be variously modified and altered by those skilled in the art to which the present disclosure pertains without departing from the spirit and scope of the present disclosure claimed in the following claims.

Therefore, implementations of the present disclosure are not intended to limit the technical spirit of the present disclosure, but provided only for the illustrative purpose. The scope of the present disclosure should be construed on the basis of the accompanying claims, and all the technical ideas within the scope equivalent to the claims should be included in the scope of the present disclosure.

## Claims

1. A system for operating a mobility apparatus, the system comprising:
a sensor;
an output device;
a memory that stores at least one instruction; and
a processor operatively connected with the sensor, the output device, and the memory,
wherein the at least one instruction is configured to, when executed by the processor, cause performance of operations comprising:
identifying an estimated landing point of the mobility apparatus based on sensing information obtained using the sensor, and
providing, via the output device, a user with at least one image including marking information corresponding to the estimated landing point.

2. The system of claim 1, wherein the operations further comprise: obtaining the sensing information about the mobility apparatus and a landing site using the sensor while the mobility apparatus performs a hovering operation above an area adjacent to the landing site.

3. The system of claim 1, wherein the sensing information includes at least one of posture information of the mobility apparatus, a speed of the mobility apparatus, a flight direction of the mobility apparatus, a real-time position of the mobility apparatus, or a relative distance between the mobility apparatus and a landing site, or any combination thereof.

4. The system of claim 1, further comprising a marking device configured to operate a light source,
wherein identifying the estimated landing point comprises estimating a landing point based on the mobility apparatus maintaining a current flight state using the sensing information,
wherein the operations further comprise operating the marking device to irradiate light from the light source to the estimated landing point, and
wherein the marking information includes a specified marker corresponding to the light source.

5. The system of claim 4, wherein the operations further comprise:
identifying an altitude of the mobility apparatus using the sensor; and
adjusting a size of the light irradiated from the light source based on a variation of the altitude while maintaining a size of the specified marker.

6. The system of claim 4, wherein the operations further comprise:
identifying a flight posture and a flight direction of the mobility apparatus using the sensor; and
determining an irradiation direction of the light source toward the estimated landing point relative to the flight posture and the flight direction.

7. The system of claim 4, wherein the sensor includes at least one external camera configured to obtain information about the estimated landing point, and
wherein the operations further comprise providing, via the output device, the sensing information obtained using the at least one external camera.

8. The system of claim 7, wherein the sensor further includes at least one internal camera, and
wherein the operations further comprise:
identifying, using the at least one internal camera, a user direction that the user faces or in which the user adjusts the mobility apparatus; and
adjusting a sensing direction of the at least one external camera to thereby orient the at least one external camera to the user direction.

9. The system of claim 1, wherein the operations further comprise:
identifying a real-time flight image from a third-person point of view based on (i) the at least one image about the estimated landing point and (ii) flight information of the mobility apparatus, wherein the at least one image and the flight information are obtained using the sensor; and
providing the user with the real-time flight image via the output device.

10. The system of claim 1, wherein the operations further comprise:
identifying a real-time flight image from a top-view point of view based on (i) the at least one image about the estimated landing point and (ii) flight information of the mobility apparatus, wherein the at least one image and the flight information are obtained using the sensor; and
providing the user with the real-time flight image via the output device.

11. A method for operating a mobility apparatus, comprising:
identifying, by a processor, an estimated landing point of the mobility apparatus based on sensing information obtained using a sensor; and
providing, through an output device, a user with at least one image including marking information corresponding to the estimated landing point.

12. The method of claim 11, further comprising:
obtaining, by the processor, the sensing information about the mobility apparatus and a landing site using the sensor while the mobility apparatus performs a hovering operation above an area adjacent to the landing site.

13. The method of claim 11, wherein the sensing information includes at least one of posture information of the mobility apparatus, a speed of the mobility apparatus, a flight direction of the mobility apparatus, a real-time position of the mobility apparatus, or a relative distance between the mobility apparatus and a landing site, or any combination thereof.

14. The method of claim 11, wherein identifying the estimated landing point comprises estimating, by the processor, a landing point based on the mobility apparatus maintaining a current flight state using the sensing information, and
wherein the method further comprises:
irradiating light from a light source to the estimated landing point using a marking device; and
providing, via the output device, the user with the marking information including a specified marker corresponding to the light source.

15. The method of claim 14, further comprising:
identifying, by the processor, an altitude of the mobility apparatus using the sensor; and
adjusting, by the processor, a size of the light irradiated from the light source based on a variation of the altitude while maintaining a size of the specified marker.
